# EUROPEAN PATENT APPLICATION

(11) **EP 2 995 377 A1**
(43) Date of publication of application: **16.03.2016**
(21) Application number: 14184122.1
(22) Date of filing: 09.09.2014
(51) Int. Cl.: B01J 29/42, B01J 35/00, B01J 35/02, B01J 37/06, B01J 37/02, C10G 2/00

(54) **Catalytic materials based on functionalized ZSM-5**

(71) Applicant: ETH Zurich, 8092 Zurich (CH)
(72) Inventor: VAN BOKHOVEN, Jeroen, 8044 Zürich (CH); FODOR, Daniel, 8046 Zürich (CH)

(57) **Abstract**

The present invention provides for catalytic materials based on ZSM 5 as disclosed in the specification, methods of manufacturing such catalytic materials and to the use of such catalytic materials, particularly in tandem reactions.

## Description

The present invention relates to catalytic materials based on ZSM 5, methods of manufacturing such catalytic materials and to the use of such catalytic materials.

ZSM-5 is a well-known material used in catalysis. Fodor et al. (Chem. Commun. 2014, 50, 76, incorporated herein by referenece) disclose ZSM-5 in the form of nano-sized hollow single crystals and its synthesis. The document is silent about catalytic active sites in the form of metals or metal oxides. Choudhary et al. (US5936135) disclose processes for preparing hydrocarbons using ZSM-5 catalysts having Gallium as active sites. The catalysts used are conventional, i.e. they do not form single crystals with core-shell structure. Lacheen et al (WO2013/006374) disclose ZSM-5 catalysts having Cobalt as active sites. The catalysts described are conventional, i.e. they do not form single crystals with core-shell structure. The above materials, although suitable show deficiencies, particularly in terms of activity / selectivity and methods for obtaining them.

Silicalite crystals having catalytic sites are also known. For example Li et al. (Chem. Comm. 2014, 50, 1824) describes Pt inside hollow silicalite crystals, but no other function. Similarly, Li et al. (Chem. Comm. 2013, 49, 8507) describes Au inside hollow silicalite crystals, but again no other function.

The present invention addresses the ever-lasting need for alternative / improved catalytic materials. Specifically, a general tool (i.e. a class of catalytic materials) is desired for spatially separating active sites but keeping them as close as possible to each other. Ideally, the centers are compartmentalized and diffusion pathways are minimized.

Thus, it is an object of the present invention is to mitigate at least some of these drawbacks of the state of the art. In particular, it is an aim of the present invention to provide improved catalytic materials, simple synthesis thereof and the use of such catalytic material for obtaining useful products.

These objectives are achieved by the catalytic material as defined in claim 1 and the methods as defined in claims 6 and. Further aspects of the invention are disclosed in the specification and independent claims, preferred embodiments are disclosed in the specification and the dependent claims.

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following definitions shall apply in this specification:
As used herein, the term "a," "an," "the" and similar terms used in the context of the present invention (especially in the context of the claims) are to be construed to cover both the singular and plural unless otherwise indicated herein or clearly contradicted by the context. As used herein, the terms "including", "containing" and "com-prising" are used herein in their open, non-limiting sense

The present invention will be better understood by reference to the figures:
Figure 1 shows a schematic representation of the inventive catalytic material. The zeolite crystals are represented as squares at different steps of the synthesis, silicon and aluminum centers are depicted with grey and black, respectively, particles (b) are depicted as hexagons.
Figure 2 shows TEM image of the parent ZSM-5 before (a) and after (b) NaOH treatment, and a SEM image (c) of the NaOH treated sample.
Figure 3. shows TEM images at lower (a) and higher (b) magnification of inventive Co@hollow H-ZSM-5; partcle size distribution is in (c)[where y-axis is frequency / % and x-axis is particle size / nm]; nitrogen physisorption isotherms is in (d) [where y-axis is adsorbed volume / cm³/g at STP and x-axis is p/p₀]; XRD pattern (e) [where Co3O4 reference is given above and inventive Co@hollow H-ZSM-5 is given below; and TPD curve of inventive Co@hollow H-ZSM-5 is in (f). The isotherms of NaOH treated ZSM-5 and that of Co@hollow H-ZSM-5 are consecutively shifted by 200 cm³/g.
Figure 4 shows TEM images of inventive Fe@hollow ZSM-5 after drying at room temperature (a) and calcination (b). Particle size distribution is in (c) [where y-axis is frequency / % and x-axis is particle size / nm].
Figure 5 shows TEM images of inventive Fe/hollow ZSM-5 after drying at 110 °C for 8 h (a) and calcination (b). Particle size distribution is in (c) [where y-axis is frequency / % and x-axis is particle size / nm].

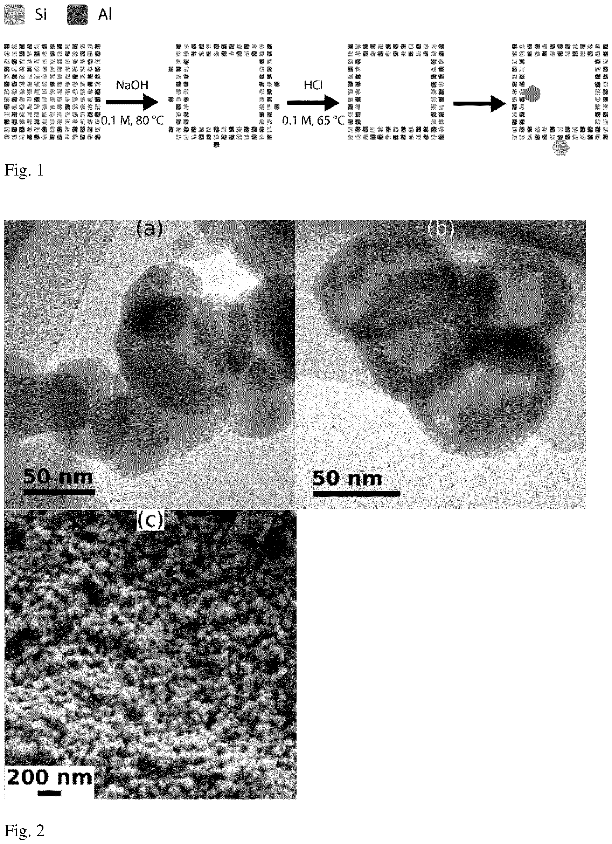

In more general terms, in a first aspect, the invention relates to a catalytic active material comprising hollow ZSM-5 and catalytically active sites. In its broadest sense, the invention provides a catalytic material comprising a ZSM-5 and catalytic active sites, characterized in that (a) the ZSM-5 is in the form of single crystals with core-shell structure, is a nano-box with crystals of 50 - 120 nm in size and a hollow interior enclosed by a 5 - 25 nm single crystal shell, has a Si/Al ratio in the range of 15 to 100, preferably 30 to 50, and (b) the active sites comprise at least one metal and / or metal oxide particles present in an amount of 0.1-40 wt-% (based on the catalytic material) and optionally acid sites. This aspect of the invention shall be explained in further detail below:
The inventive materials may be described as ZSM-5 hollow zeolites, functionalized with multiple catalytic sites the structure of which resembles a cell-like structure on the nanometer scale. The crystal size of the hollow zeolite is below 100 nm, typically around 70 nm. The hollow single crystals are functionalized with up to three spatially separated active sites and thus it acts as a nanoreactor. The active sites are metals or metal oxides inside and/or outside the hollow and they are interconnected with zeolite channels which, in turn, can be further functionalized with acid sites.
   **ZSM-5** (a): The specific ZSM-5 material is known per se and available according to known methods, such as Fodor et al, cited above.
      In an advantageous embodiment, the invention relates to ZSM-5 with Si/Al = 50, 70 nm crystal size with a single cavity inside the crystal and 12 nm wall thickness.
   Active sites: The term active site is known in the field. and includes both, particles (b) as defined below and acid sites as defined below.
   Particles (b): are identified as hexagons in figure 1. In an advantageous embodiment, the invention relates to catalytic material wherein the particles (b) are predominantly inside the nano-box or wherein the particles (b) are predominantly outside the nano-box. In this context, the term "predominantly" is defined as > 50 % (by number) of the particles are inside or outside the nano-box. This value may be determined by TEM images, where the location of individual particles is determined, counted and normalized to the total number of particles. In an advantageous embodiment, the particles (b) are of 0.6-60 nm in size.
   Acid sites: In addition to the particles defined above, the catalytic material may additionally comprise acid sites. Such acid sites may be located in the single crystal shell.

In further embodiments, the invention provides for catalytic material as described herein, wherein the catalytic active sites are selected from
- one single species of metal / metal oxide;
- one single species of metal/metal oxide and additional acid sites;
- two different species of metal / metal oxide; and
- two different species of metal/metal oxide and additional acid sites.

In preferred embodiments, the invention provides for catalytic material as described herein, wherein the catalytic active sites are selected from
- two different species of metal/metal oxide particles; and
- one single species of metal / metal oxide particle and acid sites.
The advantage of combining separate active sites is that tandem / cascade reactions may be performed using the same catalyst. It is particularly beneficial that such cascade reactions are now available using heterogeneous catalysts.

In further embodiments, the invention provides of catalytic material as described herein, wherein the active sites are selected from
a. Cobalt (oxide) within said hollow interior;
b. Cobalt (oxide) outside said hollow interior;
c. Iron (oxide) within said hollow interior;
d. Iron (oxide) outside said hollow interior;
e. Molybdenum (oxide) within said hollow interior;
f. Molybdenum (oxide) outside said hollow interior;
g. Zinc (oxide) within said hollow interior;
h. Zinc (oxide) outside said hollow interior;
i. Tungsten (oxide) within said hollow interior;
j. Tungsten (oxide) outside said hollow interior;
k. Manganese (oxide) within said hollow interior;
l. Manganese (oxide) outside said hollow interior;
m. Vanadium (oxide) within said hollow interior;
n. Vanadium (oxide) outside said hollow interior;
o. Chromium (oxide) within said hollow interior;
p. Chromium (oxide) outside said hollow interior;
q. Nickel (oxide) within said hollow interior;
r. Nickel (oxide) outside said hollow interior;
s. Copper (oxide) within said hollow interior;
t. Copper (oxide) outside said hollow interior;
u. Palladium (oxide) outside said hollow interior;
v. Palladium (oxide) within said hollow interior;
w. Platinum (oxide) within said hollow interior;
x. Platinum (oxide) outside said hollow interior;
y. Rhodium (oxide) within said hollow interior;
z. Rhodium (oxide) outside said hollow interior;
aa. Silver (oxide) within said hollow interior;
bb. Silver (oxide) outside said hollow interior;
cc. Gold (oxide) within said hollow interior;
dd. Gold (oxide) outside said hollow interior;
ee. Ruthenium (oxide) within said hollow interior; and
ff. Ruthenium (oxide) outside said hollow interior.
In each case (a) to (ff) optionally acid sites may be present within the single crystal zeolite shell.

The material described herein shows a number of beneficial properties, which will become more apparent when considering the examples provided below.

Structure. Spatially separated active sites, resembling a cell-like structure on a nanoscale, are assembled by using hollow zeolites below 100 nm crystal size and incipient wetness impregnation and ion exchange techniques. Two types of metal or metal oxide nanoparticles are separated by ZSM-5 zeolite channels. The nanoparticles are placed selectively inside or outside a hollow single crystal and interconnected by zeolite pores, allowing intermediate and product diffusion. Selectivity for placing particles (b) inside the hollows is above 80 %; for placing the particles (b) on the outer surface is above 60%.

Sintering resistance. The present invention describes a method to encapsulate catalytic active nanoparticles in a closed zeolite shell.

Shape and size selectivity. The strength of zeolites is shape and size selectivity. Only those reactants can be converted and those intermediates or products can be formed which can pass through the zeolite channels.

**All-heterogeneous** system. The catalytic material is a solid material and shows the advantages of a heterogeneous catalyst: easy separation and stability under harsh conditions.

In a second aspect, the invention relates to a process for manufacturing catalytic active materials as described herein. In its broadest concept, a ZSM-5 material is provided and active sites are created by impregnation and optionally ion exchange. For obtaining particles (b) inside or outside said nano-boxes, the ZSM-5 material is impregnated with a metal precursor, dried and calcined. For obtaining the optional acid sites as additional active sites in the walls of said ZSM-5 material, the material is subjected to ion exchange, dried and calcined. It was found beneficial to establish particles (b) first and then acid sites, i.e. impregnation prior to ion-exchange. Without being bound to theory, it is believed that ion exchange has to be the last step, as unwanted ion exchange may take place during impregnation. Specifically, the invention provides for a method for manufacturing catalytic material as described herein, said method comprising the steps of (a) providing a ZSM-5 material as defined herein; (b) incipient wetness impregnation of said ZSM-5 with a solution comprising a precursor of the metal / metal oxide; (c) drying the thus obtained material; (d) calcining the dried material; and optionally (e) ion exchange of said ZSM-5 with a solution containing an ammonium salt or acid, (f) drying the thus obtained material; (g) calcining the dried material.

This aspect of the invention shall be explained in further detail below:
Performing steps (a) to (d) will result in a catalytic material comprising one single species of metal / metal oxide.
Performing steps (a) to (d) and then repeating steps (b) to (d) by use of the same precursor will result in catalytic material comprising one single species of metal / metal oxide with a higher loading.
Performing steps (a) to (d) and then repeating steps (b) to (d) by use of a different precursor will result in catalytic material comprising two different species of metal / metal oxide.

Additionally performing steps (e) to (g) will create additional acid sites in the wall of the ZSM-5 material.
Step (a): ZSM-5 as described herein may be obtained according to Fodor et al, discussed above. Alternatively according to Mei et al., J. Mater. Chem. 2008, 18, 3496 or according to Wang et al., Microporous Mesoporous Mater. 2008, 113, 286.
Step (b): Impregnation steps are known to the skilled person. Advantageously the solution of step (b) comprises a soluble metal precursor, preferably selected from the group consisting of metal nitrates, chlorides, hydroxides, acetylacetonates, citrates, and ammonium citrates. Advantageously the solution of step (b) comprises a solvent (or a combination of solvents) selected from the group consisting of water, C1-C4 alcohols (particularly ethanol, methanol), C2-C5 ethers (particularly tetrahydrofurane), C3-C5 ketones (particularly acetone), C6-C10 aromatic compounds which are optionally substituted by C1-C4 alkyl (particularly toluene).
Step (c), **(f):** Drying steps are known to the skilled person. Advantageously, drying is performed below 50°C or drying is performed above 100°C. Drying influences the location of the particles.
Step (d), (g): Calcination steps are known to the skilled person. Advantageously, calcination is performed above 300°C, preferably at 550°C.
Step (e): Ion exchange steps are known to the skilled person. Advantageously the solution of step (e) comprises water as a solvent and a soluble ammonium salt, preferably ammonium nitrate, or an acid. Advantageously the solution of step (e) is contacted with the solid material between 50-100 °C, preferably at 80 °C under stirring.

In a further embodiment, a post-treatment is performed. Such post-treatment steps are known per se.

In an advantageous embodiment, steps (b) and (c) are repeated. This allows for higher loading of the catalytic active material (the "particles" as discussed herein).

In a third aspect, the invention relates to a catalytic device comprising a catalytic material as described herein. This aspect of the invention shall be explained in further detail below:

In one embodiment, the invention provides for a catalytic device comprising a catalytic material as described herein and a housing. The housing and the catalytic device depend on the reaction to be performed, a person skilled in the art is in a position to design such device. In one embodiment the housing of the catalytic device comprises a support for the catalytic active material, at least one inlet adapted for receiving starting materials and at least one outlet adapted for releasing reacted and not reacted materials. Further such housing may comprise heating or cooling elements. Further such housing may comprise detectors or sensors, adapted to control the reaction or to provide suitable data for controlling the reaction.

In a **forth aspect,** the invention relates to the use of a catalyst / catalytic device as defined herein in a chemical reaction, particularly in a liquid-phase or gas-phase reaction. This aspect of the invention shall be explained in further detail below:
The inventive catalytic materials are particularly suitable for cascade reactions (a synonymous term would be tandem reactions). Exemplifying two reactions with the general scheme A → B and B → C, where the number of reactants and products is not considered, one can reduce the steps necessary to make the product C from the reactant A in a cascade reaction: A → B → C. In this way the product B is rendered to an intermediate, which is transformed in the same reaction system to the desired product C.

The invention further provides for the use of the catalytic material / catalytic devices in a broad range of catalytic reactions, including cascade reactions of hydrocarbons or synthesis gas. Particularly, cascade-reactions of (i) Fischer-Tropsch synthesis coupled with isomerization / cracking or (ii) hydroisomerization / hydrocracking or (iii) dehydrocyclization or (iv) dehydroaromatization of methane or (v) (de)hydrogenation may be performed using the inventive catalytic material.

Fischer-Tropsch reactions and suitable catalysts therefore are known. This reaction is intrinsically non-selective. The combination of conventional Fischer-Tropsch catalysts with an acidic function makes the product distribution narrower / more selective. It is believed that the acid sites isomerize and crack long-chain hydrocarbons which is advantageous if gasoline range products are desired.

Hydroisomerization / hydrocracking reactions and suitable catalysts therefore are also known. This reaction is an example for an industrial process, where bifunctional catalysts are used. Nobel metals are used for dehydrogenation of saturated hydrocarbons, the as-formed olefins isomerize / crack on acid sites and the product is rehydrogenated to saturated hydrocarbons. Whether isomerization or cracking dominates, depends inter alia on the reaction conditions.

Dehydrocyclization is another example, where (de)hydrogenation function is used in combination with an acid site. Dehydroaromatization of methane is carried out over molybdenum supported on acidic catalysts.

The invention further provides for the use of the catalytic material / catalytic devices in a broad range of synthesising useful chemical compounds, such as manufacturing of hydrocarbons, particularly ethene, propene, butenes, benzene, gasoline, jet - and diesel fuel.

To further illustrate the invention, the following **examples** are provided. These examples are provided with no intend to limit the scope of the invention.

### Synthesis

The synthesis is schematically depicted in Fig. 1.

Starting Materials: Up to step 3 the method is described in Fodor et al, discussed above. The parent ZSM-5 crystals (Figure 1 step 1) are synthesized according to Mochizuki, et al (Microporous Mesoporous Mater. 2011, 145, 165) which gives approximately 80 x 60 x 60 nm aluminum-zoned crystals. The interior of the crystals is silicon-rich and prone to sodium hydroxide attack while the rim of the crystal is aluminum-rich, which is resistant against dissolution under basic conditions. The post-synthetic treatment consists of a sodium hydroxide treatment with a 0.1 M solution at 80 °C. During leaching the silicon-rich interior dissolves and aluminum-rich species redeposit on the surface of the crystal (step 2). These are removed in a mild acid treatment (Beers et al., J. Catal. 2003, 218, 239 and Fernandez et at., Chem. Eur. J. 2010, 16, 6224.). This step consists of a treatment in 0.1 M hydrochloric acid solution at 65 °C (step 3). After drying and calcination this material is used for functionalization.
Functionalization: The functionalization is made by incipient wetness impregnation or ion exchange. By varying the drying temperature after impregnation, particles form either inside or outside the hollows (step 4).

### a. Synthesis of nano-size ZSM-5

The synthesis is adapted from the literature (Mochizuki et al., Microporous Mesoporous Mater. 2011, 145, 165.). First, 25 wt% tetrapropylammonium hydroxide (TPAOH) solution was added to a reactor containing tetraethyl orthosilicate (TEOS). The mixture was stirred with 500 rpm at 80 °C for 24 h. After cooling down, calculated amount of NaOH / Al(NO₃)₃·9H₂O / deionized water solution was added to the reactor containing the TPAOH / TEOS mixture. The final gel composition was Al₂O₃ : 100 SiO₂ : 25 TPAOH : 5 Na₂O : 830 H₂O. After homogenization the gel was crystallized at 170 °C for 24 h without agitation. The final product was centrifuged, washed thoroughly with water, dried (110 °C, 8h) and calcined (5 °C/min, 550 °C, 10 h). TPAOH can stem from commercial source or own synthesis by reacting calculated amount of Ag₂O and tetrapropylammonium bromide (TPABr). The latter approach was preferred. When choosing the synthesis route with Ag₂O and TPABr, the solutions and the gel were protected from light. During the synthesis argon atmosphere, Milli-Q water and high-purity precursors were preferred.

### b. Synthesis of hollow ZSM-5

Post-synthetic treatment was carried out with 0.1 M sodium hydroxide solution by stirring at 80 °C and 500 rpm for 10 h. After leaching, the sample was centrifuged, washed and dried (110 °C, 8 h). The product was washed with 0.1 M hydrochloric acid solution at 65 °C and 500 rpm for 6 h to remove aluminum rich deposits. The liquid to solid ratio was 35 g solution for 1 g zeolite. After centrifugation and washing, the product was dried (110 °C, 8h) and finally calcined (5 °C/min, 550 °C, 5 h).
The preferred way of synthesizing hollow zeolite crystals is described above, but may also be obtained from other routes and are known in the field.

### c. Synthesis of Co@hollow H-ZSM-5

Functionalization with cobalt oxide particles was carried out with incipient wetness impregnation. Co(NO₃)₂·6H₂O precursor was dissolved in water. The volume of solution during impregnation was set below the total pore volume of the zeolite. After impregnation the sample was dried at room temperature for one day. The impregnation / drying cycles were repeated as many times as it was needed to achieve 21 wt% cobalt loading. After the final drying step the sample was calcined at 550 °C for 5 h. To functionalize the zeolite channels with acid sites, the product was ion exchanged to H form (1 M NH₄NO₃, 80 °C, 2 x 2 h), dried (110 °C, 8 h) and calcined (5 °C/min, 500-550 °C, 5 h).

### d. Synthesis of Fe@hollow ZSM-5

Functionalization with iron oxide particles inside the hollows was carried out with FeCl₃·6H₂O solution in a single step as described in (c)

### e. Synthesis of Fe/hollow ZSM-5

Functionalization with iron oxide particles outside the hollows was carried out with FeCl₃·6H₂O solution as described in a single step as described in (c) except that after impregnation the sample was dried at 110 °C for 8 h.

### f. Characterization methods

Nitrogen physisorption was carried out with a Micromeritics TriStar 3000 instrument at liquid nitrogen temperature.
Prior to measurement the sample was pretreated at 300 °C for at least 4 h in vacuum. Total pore volume was measured as a single point at *p*/*p*₀ = 0.95, total surface area was derived from the BET model, external surface area and micropore volume were derived from t-plot. TEM measurements were carried out with a Philips CM12 microscope operated at 100 kV or a FEI Tecnai G2 Spirit operated at 120 kV. The samples were prepared by dipping the grid in ethanol suspension of the solid and drying in air. XRD patterns were obtained with a PANalytical X'Pert Pro MPD instrument using a Cu Kα radiation. NH3-TPD was measured with a Thermo TPDRO 110 instrument equipped with a TCD. After pretreatment (550 °C, 2 h), ammonia adsorption / purging cycles were repeated 3 times (adsorption: 10 % NH₃ in He, 30 min, 200 °C, purging: He, 1 h, 200 °C). Finally, adsorbed ammonia was desorbed by increasing the temperature to 700 °C with 10 °C/min.

### Results

### g. Hollow H-ZSM-5

H-ZSM-5 is the starting material for functionalization. TEM and SEM images of the parent and sodium hydroxide treated samples are in Figure 2. The crystal size (length x width) of the parent sample is approximately 80 x 60 nm (Figure 2a). After leaching, a single cavity is visible in the crystals (Figure 2b). The crystals are closed, large majority of the crystal shells are intact after 10 h sodium hydroxide treatment (Figure 2c). After hydrochloric acid treatment there are no changes in structure or morphology, the Si/2Al ratio is close to that of the parent sample.

### h. Co@hollow H-ZSM-5

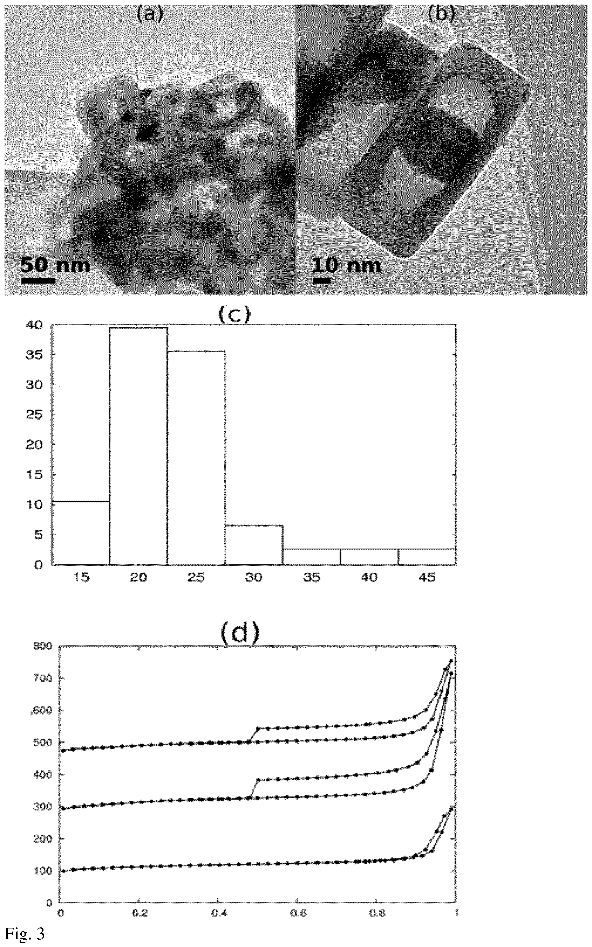

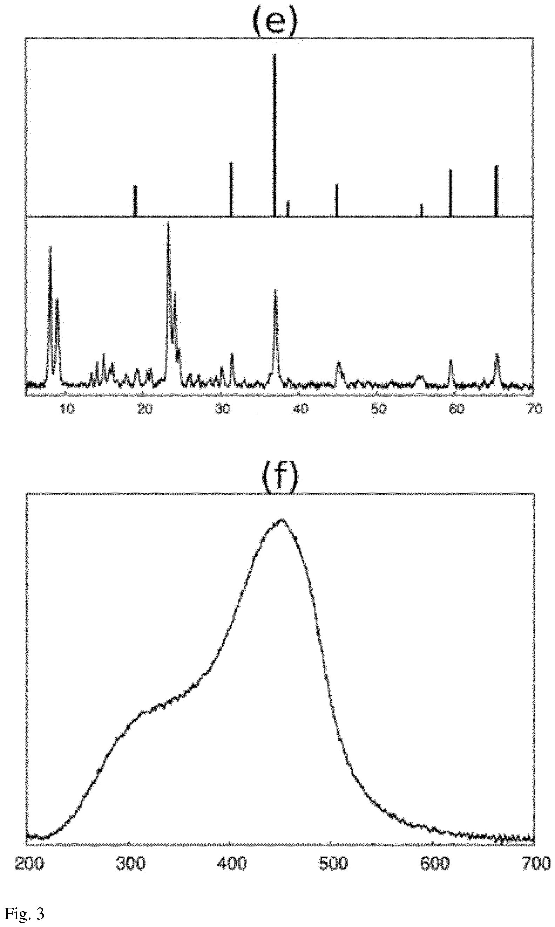

The TEM image in Figure 3a and b shows the hollow ZSM-5 after functionalization with cobalt oxide particles at lower and higher magnification, respectively. Metal loading is 21 wt%, average particle size is 20.8 nm (SD = 6.4 nm) and the majority of the particles are inside the hollows (82 %). No particles with a size below 10 nm and a few above 30 nm are visible in TEM images (Figure 3c). The nitrogen uptake increases after the sodium hydroxide treatment of the parent ZSM-5 and it decreases after functionalization with cobalt oxide particles and acid sites (Figure 3d). Table 1 shows the textural characteristics derived from the isotherms. The external surface area increases after the sodium hydroxide treatment and further increases slightly after functionalization. The development of micropore surface area is reversed. The total pore volume increases from 0.25 cm³/g to 0.32 cm³/g after the base treatment and decreases to 0.27 cm³/g after functionalization with cobalt oxide particles. Comparison of the XRD pattern with literature and library data shows that the material is composed of MFI and Co₃O₄ phases. Library data are based on the publication of Picard et al. (Picard et al., J. Less-Common Met. 1980, 75, 99) and the reflections above 2 % intensity are plotted on Figure 3e for comparison. Acid sites represent the second catalytically active center. NH₃-TPD shows the presence of acid sites. Compared to the acid treated sample (see Fodor et al.), the peak centered above 400 °C has a shoulder at 310 °C in Co@hollow H-ZSM-5. Potential field of application of this particular catalyst is Fischer-Tropsch synthesis.

**Table 1. Textural characteristics determined with nitrogen physisorption.**

| Sample | *S*_{BET} | *S*_{micr} | *S*ₑₓₜ | *V*ₜₒₜ | *V*_{micr} |
|---|---|---|---|---|---|
| | [m²/g] | [m²/g] | [m²/g] | [cm³/g] | [cm³/g] |
| Parent ZSM-5 | 390 | 297 | 93 | 0.25 | 0.13 |
| NaOH treated ZSM-5 | 366 | 232 | 133 | 0.32 | 0.10 |
| Co@hollow H-ZSM-5 | 314 | 170 | 144 | 0.27 | 0.08 |

### i.Fe@hollow ZSM-5

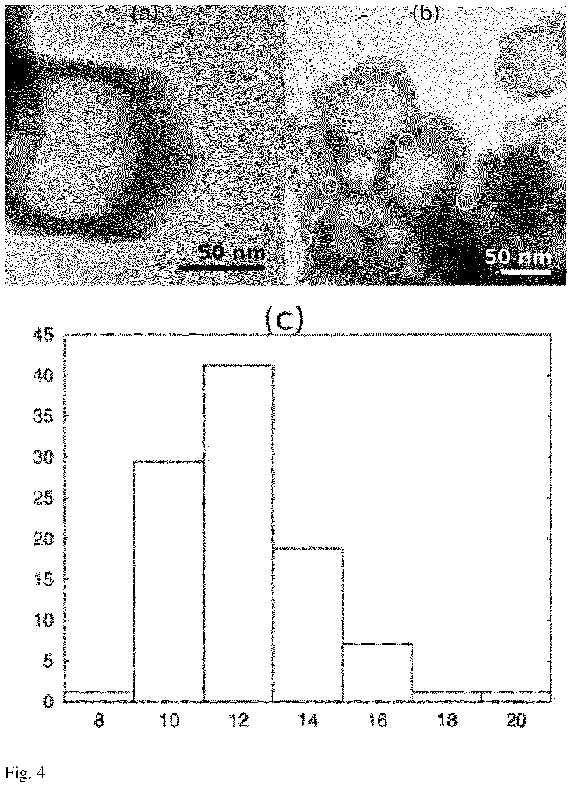

Figure 4 shows the TEM images of nano-size ZSM-5 after impregnating with the iron precursor and drying at room temperature (a). If the sample is dried at room temperature, no particle formation is observed. Clusters contribute to mass-thickness contrast inside the edge of the hollow. After calcination 85 % of the particles are inside the hollows at 5 wt% metal loading. They are encircled in Figure 4b. Average particle size is 11.2 nm (SD = 2.1 nm), particle size distribution is in Figure 4c.

### j. Fe/hollow ZSM-5

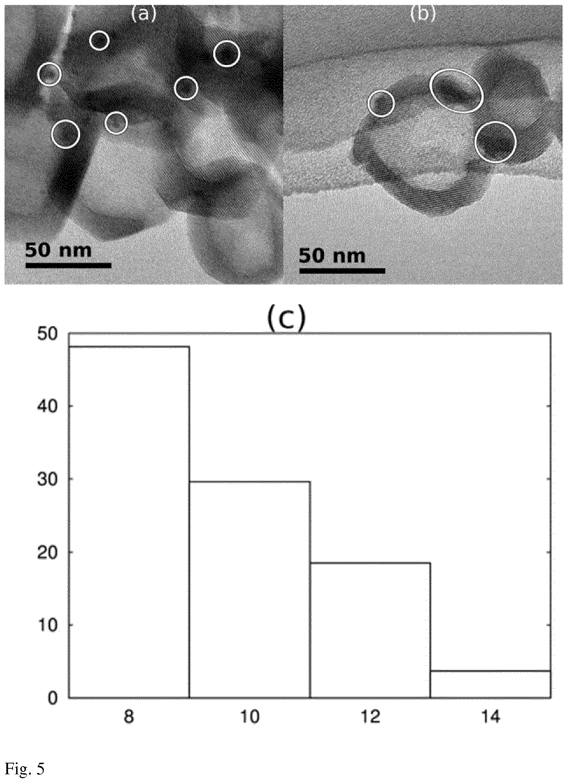

Particle formation is observed after drying the impregnated hollow zeolites with the iron precursor at elevated temperature. They are mostly outside the hollows (Figure 5a). After calcination the majority (62%) of the particles are located on the outer surface of the crystals at 5 wt% metal loading (Figure 5b). Higher selectivity to particle formation on the outer surface is anticipated if using a precursor which is excluded from the 0.55 nm channels. The particle size is 8.6 nm (SD = 1.9 nm), particle size distribution is in Figure 4c.

## Claims

1. A catalytic material comprising a ZSM-5 and catalytic active sites, **characterized in that**
(a) the ZSM-5
▪ is in the form of single crystals with core-shell structure,
▪ is a nano-box with crystals of 50 - 100 nm in size and a hollow interior enclosed by a 5 - 25 nm single crystal shell,
▪ has a Si/Al ratio in the range of 15 to 100,
(b) the active sites
▪ comprise particles of at least one metal and / or metal oxide in an amount of 0.1-40 wt-% (based on the catalytic material), and
▪ optionally comprise acid sites.

2. The material according to claim 1, wherein the ZSM-5 has a Si/Al = 50, 70 nm crystal size with a single cavity inside the crystal and 12 nm wall thickness.

3. The material according to any claim 1 or 2,
▪ wherein said particles (b) are predominantly inside the nano-box, or
▪ wherein said particles (b) are predominantly outside the nano-box, and
▪ wherein said acid sites are in the single crystal shell, if present.

4. The material according to any of the preceding claims, wherein the catalytic active sites are selected from
▪ one single species of metal/metal oxide;
▪ one single species of metal/metal oxide and additional acid sites;
▪ two different species of metal/metal oxide;
▪ two different species of metal/metal oxide and additional acid sites.

5. The material according to any of the preceding claims, wherein the active sites are selected from
(a) Cobalt (oxide) within said hollow interior;
(b) Cobalt (oxide) outside said hollow interior;
(c) Iron (oxide) within said hollow interior;
(d) Iron (oxide) outside said hollow interior;
(e) Molybdenum (oxide) within said hollow interior;
(f) Molybdenum (oxide) outside said hollow interior;
(g) Zinc (oxide) within said hollow interior;
(h) Zinc (oxide) outside said hollow interior;
(i) Tungsten (oxide) within said hollow interior;
(j) Tungsten (oxide) outside said hollow interior;
(k) Manganese (oxide) within said hollow interior;
(l) Manganese (oxide) outside said hollow interior;
(m) Vanadium (oxide) within said hollow interior;
(n) Vanadium (oxide) outside said hollow interior;
(o) Chromium (oxide) within said hollow interior;
(p) Chromium (oxide) outside said hollow interior;
(q) Nickel (oxide) within said hollow interior;
(r) Nickel (oxide) outside said hollow interior;
(s) Copper (oxide) within said hollow interior;
(t) Copper (oxide) outside said hollow interior;
(u) Palladium (oxide) outside said hollow interior;
(v) Palladium (oxide) within said hollow interior;
(w) Platinum (oxide) within said hollow interior;
(x) Platinum (oxide) outside said hollow interior;
(y) Rhodium (oxide) within said hollow interior;
(z) Rhodium (oxide) outside said hollow interior;
(aa) Silver (oxide) within said hollow interior;
(bb) Silver (oxide) outside said hollow interior;
(cc) Gold (oxide) within said hollow interior;
(dd) Gold (oxide) outside said hollow interior;
(ee) Ruthenium (oxide) within said hollow interior;
(ff) Ruthenium (oxide) outside said hollow interior;
and in each case (a) to (ff) optionally acid sites within the single crystal zeolite shell.

6. A method for manufacturing catalytic material according to any of claims 1-5, said method comprising the steps of
(a) providing a ZSM-5 material as defined herein;
(b) incipient wetness impregnation of said ZSM-5 with a solution comprising a precursor of the metal / metal oxide;
(c) drying the thus obtained material;
(d) calcining the dried material;
and optionally
(e) ion exchange of said ZSM-5 with a solution containing an ammonium salt or acid,
(f) drying the thus obtained material;
(g) calcining the dried material.

7. The method according to claim 6, whereby steps (b) and (c) are repeated.

8. The method according to claim 6 or 7, whereby as step (h) a post-treatment is performed.

9. The method according to any of claims 6-8, whereby step (c) is performed below 50°C or step (c) is performed above 100°C.

10. The method according to any of claims 6-9, whereby the solution of step (b) comprises
▪ a metal precursor selected from the group consisting of metal nitrates, -chlorides, - hydroxides, -acetylacetonates, -citrates, and - ammonium citrates and
▪ a solvent selected from the group consisting of water, C1-C4 alcohols, C2-C5 ethers, C3-C5 ketones, C6-C10 aromatic compounds which are optionally substituted by C1-C4 alkyl.

11. A catalytic device comprising a catalytic material according to any of claims 1-5 and a housing.

12. The catalytic device according to claim 11, whereby the housing comprises a support for the catalytic active material, at least one inlet for starting materials and at least one outlet for reacted and not reacted materials, optionally heating or cooling elements, optionally detectors.

13. Use of a catalyst according to any of claims 1-5 or a catalytic device according to any of claim 12 in a liquid-phase reaction or in a gas-phase reaction.

14. The use according to claim 13, whereby the reaction is selected from the group consisting of tandem reactions of hydrocarbons or synthesis gas. Particularly, tandem-reactions of (i) Fischer-Tropsch synthesis coupled with isomerization / cracking or (ii) hydroisomerization / hydrocracking or (iii) dehydrocyclization or (iv) dehydroaromatization of methane or (v) (de)hydrogenation.

15. The use according to claim 13 for manufacturing hydrocarbons, particularly ethene, propene, butenes, benzene, gasoline, jet fuel and diesel fuel.
